# EUROPÄISCHE PATENTANMELDUNG

(11) **EP 0 745 884 A2**
(43) Veröffentlichungstag der Anmeldung: **04.12.1996**
(21) Anmeldenummer: 96108532.1
(22) Anmeldetag: 29.05.1996
(51) Int. Cl.: G02F 1/1335

(54) **Bildschirm zur Anzeige dreidimensionaler Bilder**

(30) Priorität: 31.05.1995 DE 19520044; 29.08.1995 DE 19531760
(71) Anmelder: Siemens Nixdorf Informationssysteme AG, 33106 Paderborn (DE)
(72) Erfinder: Lockmann, Klaus, Dipl.-Ing.(FH), 33129 Delbrück (DE); Mayer, Christoph, Dipl.-Ing.(FH), 86159 Augsburg (DE)
(74) Vertreter: Fuchs, Franz-Josef, Dr.-Ing.

(57) **Zusammenfassung**

Vorgeschlagen wird ein Bildschirm zur Anzeige dreidimensionaler Bilder auf einer zeilen- und spaltenweise in Bildpunkte (BP) unterteilten zweidimensionalen Anzeigefläche durch räumliches oder zeitliches Unterteilen der zweidimensionalen Anzeigefläche unter Anwendung der Licht-Polarisationstechnik. Der Bildschirm ist in einem Fall zeilen- und/oder spaltenweise unterteilt in der Form, daß jeweils zwei benachbarte Bildpunkte (BP) eine unterschiedliche Polarisierung aufweisen. In einem anderen Fall ist der Bildschirm in der Weise aufgebaut, daß auf einer Anzeigefläche zur Anzeige eines zweidimensionalen Bildes ohne einen oberen Polarisierungsfilter (OPF) eine Flüssigkristallschicht (FKE2) mit um 90 Grad verdrillten Flüssigkristallen angeordnet ist, die nach einem Anlegen einer Spannung für die Dauer des Anlegens der Spannung ganzflächig um 90 Grad zurückverdrehte Flüssigkristalle hat.

## Beschreibung

Die Erfindung betrifft einen Bildschirm zur Anzeige dreidimensionaler Bilder gemäß den Oberbegriffen der Ansprüche 1 bzw. 3.

Ein Flüssigkristallbildschirm (LCD: Liquid Crystal Display) beispielsweise ist ein Gerät, auf dem Bilder und Texte zwei-dimensional angezeigt werden können. Er wird zur Zeit vorwiegend in mobilen Computern eingesetzt. Flüssigkristallbildschirme polarisieren das Licht in einem bestimmten Winkel. Dies ist eine Eigenschaft, die Teil der Flüssigkristallanzeigetechnik ist.

Zur Flüssigkristallanzeigetechnik gehören sogenannte Polarisationsfilter. Ein Polarisationsfilter ist nur für Licht einer ganz bestimmten Polarisationsrichtung durchlässig. Diese Richtung ist auch als Polarisationswinkel definiert. Werden zwei Polarisationsfilter mit gleichem Polarisationswinkel übereinander gelegt, dann sind diese durchsichtig. Werden zwei Polarisationsfilter mit unterschiedlichem Polarisationswinkel aufeinander gelegt, dann sind diese lichtundurchlässig. Gleiches funktioniert auch, wenn zwischen den Polarisationsfiltern ein Abstand besteht oder wenn eine Polarisationsbrille in Zusammenhang mit einem polarisierendem Bildschirm verwendet wird.

In Vergnügungszentren ist es bekannt, zur Darstellung von dreidimensionalen Filmen den Polarisationseffekt auszunützen. Dabei wird das Bild für das linke Auge vertikal polarisiert auf eine Ebene projiziert und das Bild für das rechte Auge horizontal polarisiert auf dieselbe Ebene projiziert. Eine entsprechende Polarisationsbrille sorgt dafür, daß nur das Bild vom jeweiligen Auge gesehen wird, das gesehen werden soll. Hierdurch wird der dreidimensionale Eindruck vermittelt, wobei ein Positionsunterschied eines Objektes für das linke bzw. rechte Auge noch zu berücksichtigen ist.

Einen technologischen Hintergrund bezüglich der Flüssigkristallanzeigetechnik vermittelt folgender druckschriftlicher Stand der Technik: DE-Z Funkschau, Okt. 1995, "Neue Display-Technik", Dr. Joachim Glück, Seiten 48 bis 51 und Magazin für Computertechnik (c't), 1994, Heft 7, "Twist in Farbe und Schwarzweiß", Georg Schnurer, Seiten 122 bis 126.

Aufgabe der Erfindung ist es, einen Bildschirm beispielsweise für Computer anzugeben, der unter Anwendung der Licht-Polarisationstechnik die Darstellung dreidimensionaler Bilder ermöglicht.

Diese Aufgabe wird ausgehend von einem Bildschirm der eingangs genannten Art erfindungsgemäß mit den in den kennzeichnenden Teilen der Ansprüche 1 bzw. 3 angegebenen Merkmalen gelöst.

Danach erfolgt ein räumliches oder zeitliches Unterteilen der zweidimensionalen Anzeigefläche unter Anwendung der Licht-Polarisationstechnik. Der Bildschirm ist in einem Fall zeilen- und/oder spaltenweise unterteilt in der Form, daß jeweils zwei benachbarte Bildpunkte eine unterschiedliche Polarisierung aufweisen. Bei LCD-Bildschirmen ist dabei eine negierte Ansteuerung der benachbarten Bildpunkte notwendig. In einem anderen Fall ist der Bildschirm in der Weise aufgebaut, daß auf der Anzeigefläche zur Anzeige eines zweidimensionalen Bildes eine Flüssigkristallschicht mit um 90 Grad verdrillten Flüssigkristallen angeordnet ist, die nach einem Anlegen einer Spannung für die Dauer des Anlegens der Spannung ganzflächig um 90 Grad zurückverdrillte Flüssigkristalle hat. Ein gegebenenfalls an sich vorhandener oberer Polarisationsfilter, z.B. bei LCD-Bildschirmen, kann in diesem Fall entfallen.

Vorteilhafte Ausgestaltungen der Erfindung sind Gegenstand von Unteransprüchen.

Gemäß dem Kennzeichen des Anspruchs 1 sind die einzelnen Bildpunkte eines polarisierenden Bildschirms nach einem vorgegebenen Schema polarisiert und angesteuert. Benötigt wird bei einer entsprechend übrigen bildwerten Ansteuerung des Bildschirmes lediglich noch eine entsprechende Brille, die ein Glas mit einem beispielsweise vertikalen Polarisationsfilter und eines mit einem beispielsweise horizontalen Polarisationsfilter hat. Unter übriger bildwerter Ansteuerung ist eine solche Ansteuerung zu verstehen, daß die durch die Einzelbereiche des Flächenelementes in die eine Richtung polarisierten Bildpunkte der Anzeigefläche ein Bild für das eine Auge und die durch die Einzelbereiche des Flächenelementes in die andere Richtung polarisierten Bildpunkte der Anzeigefläche ein Bild für das andere Auge entstehen lassen.

Die einzelnen Bildpunkte sind nach einem solchen vorgegebenen Schema polarisiert, daß wenigstens in eine der beiden möglichen Ausdehnungsrichtungen des Anzeigefeldes des Bildschirmes jeweils zwei benachbarte Bildpunkte eine unterschiedliche Polarisierung aufweisen. Z.B. weist ein 1. Bildpunkt eine horizontale, ein 2. Bildpunkt eine vertikale, ein 3. Bildpunkt wieder eine horizontale usw. Polarisierung auf. Je nachdem, welche der Ausdehnungsrichtungen für die abwechselnde Polarisierung maßgebend ist, erfolgt letztlich eine zeilenweise oder eine spaltenweise Polarisierung. Sind beide Ausdehnungsrichtungen gleichzeitig maßgebend, erfolgt sowohl eine zeilen- als auch eine spaltenweise Polarisierung. Die zeilenweise Polarisierung hat den Vorteil, daß ein Computer den Bildspeicher leicht verwalten kann. Ein Vorteil in der spaltenweisen Polarisierung besteht darin, daß die Polarisierung im gleichen Fertigungsprozeß durchführbar ist, in dem das Aufbringen der sogenannten RGB-Streifen bei Farbbildschirmen erfolgt.

Um eine zeilenweise oder punktweise wechselnde Polarisierung zu erhalten, könnten streifenweise polarisierte Filter statt normale Polarizer auf die Gläser geklebt werden, die die Kristallflüssigkeit begrenzen. Denkbar ist auch, eine Polarisationsschicht beim Anbringen der sogenannten RGB-Streifen mit einzubauen.

Da durch die unterschiedliche Polarisierung benachbarter Bildpunkte die Möglichkeit besteht, daß sich die Flüssigkristalle der benachbarten Bildpunkte bei einer gleichen Helligkeits-Ansteuerung in den gleichen Winkel drehen und somit der Bildpunkt mit der vertikalen Polarisierung dann hell ist, während der Bildpunkt mit der horizontalen Polarisierung dunkel erscheint, ist jeder zweite Bildpunkt negiert anzusteuern. Der Negierungseffekt des Bildschirms hebt sich dadurch auf.

Wie schon erwähnt, sieht ein Betrachter mittels einer entsprechenden Brille mit dem einen Auge die vertikal polarisierten Bildpunkte und mit dem anderen Auge die horizontal polarisierten Bildpunkte. Auf diese Weise ist ein dreidimensionales Sehen möglich. Wird der Bildschirm ohne Brille betrachtet, kann bei entsprechender Ansteuerung der Bildpunkte ein zweidimensionales Bild mit doppelter Auflösung angezeigt werden. Somit ist der Bildschirm auch als Standard-Bildschirm einsetzbar.

Eine optische oder eventuell auch prismatische Linse, die für einen Betrachter jeweils benachbarte vertikal und horizontal polarisierte Bildpunkte zu einem Bildpunkt integrieren, verhindert, daß schwarze Zwischenzeilen oder Zwischenspalten gesehen werden.

Der gleiche Effekt wird auch erreicht, wenn die Bildpunkte so nahe beieinander liegend angeordnet sind, daß ein Betrachter zwei benachbarte Bildpunkte als einen sieht. Dies ist der Fall, wenn das Verhältnis der Entfernung des Betrachters zum Abstand zweier benachbarter Bildpunkte des Bildschirms größer ungefähr 600 ist.

Eine weitere Möglichkeit zu verhindern, daß schwarze Zwischenzeilen bzw. -spalten gesehen werden, ist, die abwechselnde Polarisierung der Bildpunkte sowohl zeilen- als auch spaltenweise vorzunehmen. Die entspricht letztlich einer schachbrettartigen Polarisierung des Anzeigenfeldes des Bildschirmes.

Statt die zwei Polaritäten für das linke und das rechte Auge eines Betrachters räumlich über die Anzeigefläche verteilt zu bewerkstelligen, können diese gemäß dem Lösungsvorschlag nach Anspruch 3 auch dadurch bewerkstelligt werden, daß die Polarisierung ganzflächig zeitlich wechselt, bei einer entsprechenden übrigen bildwerten Ansteuerung des Bildschirmes. Durch die Trägheit des Auges erscheint das Bild bei ausreichend hoher Wechselrate in voller Auflösung dreidimensional. Diese Lösungsform ermöglicht das dreidimensionale Sehen unter anderem auch im Zusammenhang mit einem bekannten Röhrenbildschirmgerät. Unter bildwerter Ansteuerung ist hierzu zu verstehen, daß zeitlich nacheinander ein Bild für das eine und dann für das andere Auge eines Betrachters geliefert wird.

Die wechselnde Polarisierung erfolgt durch einen Polarisierungsfilter, der auf der Anzeigefläche eines Bildschirmes angeordnet ist und elektrisch umschaltbar ist. Der elektrisch umschaltbare Polarisierungsfilter erzeugt dann abwechselnd ganzflächig vertikal und horizontal polarisierte Bilder, wobei die Wechselrate bei größer 50 Hz liegen sollte, um ein Flimmern zu vermeiden. Der elektrisch umschaltbare Polarisierungsfilter ist durch eine Flüssigkristallschicht ohne einem oberen Polarisationsfilter gebildet. Die Flüssigkristalle der Flüssigkristallschicht sind dabei um 90 Grad verdrillt, so daß das Licht eine Drehung der Polarität um 90 Grad erfährt. Bei einer angelegten Spannung richten sich die Flüssigkristalle in Richtung des erzeugten Feldes aus und die Flüssigkristalle werden um 90 Grad zurück gedreht. Die Polarität des Lichtes beträgt damit wieder 0 Grad. Bei alternierendem Spannungspegel wechselt somit die Polarität zwischen 0 und 90 Grad.

Um Umschaltvorgänge für einen Betrachter unsichtbar zu machen, könnten auf dem umschaltbaren Polarisierungsfilter zusätzlich kreuzweise polarisierende Polarisierungsfilter aufgebracht sein.

Nachfolgend wird die Erfindung anhand einer Zeichnung näher erläutert. Darin zeigen
- Figur 1: eine Prinzipdarstellung eines Bildschirmes zur Anzeige dreidimensionaler Bilder mit räumlicher Verteilung von Polarisierungsfiltern gemäß der Erfindung,
- Figur 2: mögliche Verteilungsschemen von Polarisierungsfiltern eines Bildschirmes nach Figur 1, und
- Figur 3: eine Prinzipdarstellung eines Bildschirmes zur Anzeige dreidimensionaler Bilder mit einem zeitlich umschaltbaren Polarisierungsfilter gemäß einer weiteren erfindungsgemäßen Realisierung.

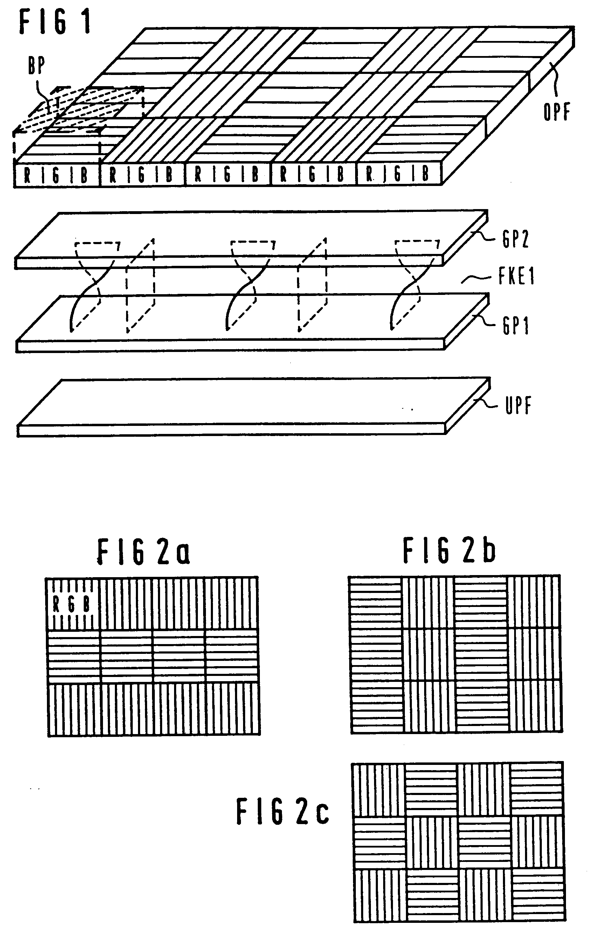

Bei dem in der Figur 1 gezeigten Bildschirm handelt es sich um einen polarisierenden Bildschirm, der auch unter der Bezeichnung Flüssigkristallbildschirm bekannt ist. Die Grundlegenden Komponenten sind, von unten nach oben aufgezählt, ein unterer Polarisierungsfilter UPF, eine erste Glasplatte GP1, eine erste Flüssigkristallebene FKE1, eine zweite Glasplatte GP2 und ein oberer Polarisierungsfilter OPF. Der andere Polarisationsfilter OPF stellt allgemein ein Flächenelement dar.

Der untere Polarisierungsfilter UPF kann durch eine Folie gebildet sein. Er weist eine Polarisierung auf, die durch schräg nach hinten laufende parallele Linien angezeigt ist.

Der obere Polarisierungsfilter OPF ist entsprechend den Bildpunkten BP des Anzeigefeldes des Bildschirms in kleine Felder (Einzelbereiche) unterteilt, die zueinander in Reihen und Spalten angeordnet sind. Er weist für eine Farbdarstellung zusätzlich einen Farbfilter auf, der pro Bildpunkt BP für jeweils die Farben Rot R, Gelb B und Blau B einen Anteil aufweist. Die Felder des oberen Polarisierungsfilters OPF sind entsprechend ihrer Polarisierung mit in unterschiedliche Richtungen weisenden Linien markiert. Felder, die eine entsprechende Polarisierung wie der untere Polarisierungsfilter UPF haben, sind entsprechend dem unteren Polarisierungsfilter mit schräg nach hinten laufenden Linien markiert. Felder, die eine Gegenteilige Polarisierung haben, sind mit um 90 Grad gedreht verlaufenden Linien markiert. Gemäß der Darstellung in der Figur 1 sind die Felder insgesamt in der Weise polarisiert, daß ein spaltenweiser Polarisationswechsel zwischen benachbarten Bildpunkten BP gegeben ist.

Durch den Polarisationswechsel zwischen benachbarten Bildpunkten BP ist es notwendig, daß die Ansteuerung der benachbarten Bildpunkte BP zueinander jeweils negiert erfolgt. Dies ist in der Figur 1 durch zwei verschiedene Symbole in der ersten Flüssigkristallebene FKE1 angedeutet.

Figur 2 zeigt in dem mit b) gekennzeichneten Schema nochmals die spaltenweise Polarisierung der einzelnen Bildpunkte BP des oberen Polarisierungsfilters OPF. Neben diesem Schema der Polarisierung der einzelnen Bildpunkte BP des oberen Polarisationsfilters OPF sind auch die mit a) und c) gekennzeichneten Schemen möglich. Das Schema a) zeigt dabei eine zeilenweise und c) eine zeilen- und spaltenweise Polarisierung der Bildpunkte BP des oberen Polarisierungsfilters.

In der Figur 3 ist im unteren Teil ein Flüssigkristallbildschirm dargestellt, dessen Aufbau in der Figur 1 bereits erläutert ist. Ein Unterschied besteht lediglich darin, daß der obere Polarisationsfilter OPF insgesamt gleichgerichtet polarisiert ist, wobei die Polarisationsrichtung gegenüber dem unteren Polarisationsfilter UPF um 90 Grad gedreht ist. Dieser Bildschirm könnte auch durch einen Röhrenbildschirm gebildet sein.

Auf dem in der Figur 3 dargestellten Flüssigkristallbildschirm ist ein zeitlich ganzflächig umschaltbarer Polarisationsfilter aufgebracht. Dieser besteht aus einer dritten Glasplatte GP3, einer zweiten Flüssigkristallebene FKE2 und einer vierten Glasplatte GP4. Auf der vierten Glasplatte ist kein oberer Polarisationsfilter angebracht, wie beispielsweise beim unteren Teil der Figur 3, der quasi einen Basisbildschirm darstellt.

Die Flüssigkristalle in der zweiten Flüssigkristallebene FKE2 sind gegenüber den Flüssigkristallen der ersten Flüssigkristallebene FKE1 um 90 Grad verdrillt ausgerichtet. Durch Anlegen einer Spannung an die zweite Flüssigkristallebene FKE2 können die Flüssigkristalle in dieser Ebene, die sich an dem dadurch global entstehenden Feld ausrichten, um 90 Grad zurück verdreht werden. Damit läßt sich die Polarisierung in der zweiten Flüssigkristallebene FKE2 zwischen 0 und 90 Grad umschalten.

Optional kann auf der vierten Glasplatte GP4 ein kreuzweise polarisierender Filter KPF aufgebracht sein, durch den Umschaltvorgänge in der zweiten Flüssigkristallebene FKE2 unsichtbar gemacht werden.

## Patentansprüche

1. Bildschirm zur Anzeige dreidimensionaler Bilder auf einer zeilen- und spaltenweise in Bildpunkte unterteilten zweidimensionalen Anzeigefläche unter Anwendung der Licht-Polarisationstechnik, **dadurch gekennzeichnet,** daß auf der zweidimensionalen Anzeigefläche ein die Anzeigefläche überspannender linearer oberer Polarisationsfilter (OPF) angeordnet ist mit pro Bildpunkt (BP) der Anzeigefläche in einer von zwei eingestellten Richtungen lichtpolarisierenden Einzelbereichen, die über das Flächenelement (OPF) verteilt in der Weise angeordnet sind, daß von einer unterschiedlichen Lichtpolarisierung zeilen- und/oder spaltenweise jeweils zwei benachbarte Bildpunkte (BP) der Anzeigefläche betroffen sind, und daß entsprechend der durch den linearen oberen Polarisationsfilter (OPF) hervorgerufenen Verteilung der unterschiedlichen lichtpolarisierenden Einzelbereiche der Anzeigeflache zeilen- und/oder spaltenweise jeweils zwei benachbarte Bildpunkte (BP) der Anzeigefläche zueinander negiert angesteuert sind.

2. Bildschirm nach Anspruch 1, **dadurch gekennzeichnet,** daß der lineare obere Polarisationsfilter (OPF) als einziger oberer Polarisationsfilter vorgesehen ist.

3. Bildschirm nach Anspruch 1 oder 2, **dadurch gekennzeichnet,** daß eine optische bzw. prismatische Linse vorgesehen ist, die für die Augen eines Betrachters zwei einander benachbarte Bildpunkte (BP) zu einem Bildpunkt integriert.

4. Bildschirm nach Anspruch 1 oder 2, **dadurch gekennzeichnet,** daß der Abstand zweier einander benachbarter Bildpunkte (BP) im Verhältnis zur Entfernung eines Betrachters zur Anzeigefläche so klein gewählt ist, daß diese für die Augen des Betrachters zu einem Bildpunkt integriert sind.
